# FASCICULE DE BREVET EUROPEEN

(11) **EP 0 929 886 B1**
(45) Date de publication et mention de la délivrance du brevet: **04.04.2001**
(21) Numéro de dépôt: 97943035.2
(22) Date de dépôt: 01.10.1997
(51) Int. Cl.: G09F 3/02, B65D 55/08

(54) **ENVELOPPE DE SECURITE POUR OBJETS, NOTAMMENT POUR DES RECIPIENTS A DISPOSITIF DE FERMETURE**
SICHERHEITSMANSCHETTE FÜR GEGENSTÄNDE,INSBESONDERE FÜR BEHÄLTER MIT VERSCHLUSSVORRICHTUNG
SECURITY COVER FOR OBJECTS, PARTICULARLY FOR CONTAINERS WITH CLOSING DEVICE

(30) Priorité: 07.10.1996 FR 9612181
(43) Date de publication de la demande: 21.07.1999
(73) Titulaire: SLEEVER INTERNATIONAL COMPANY, F-91420 Morangis (FR)
(72) Inventeur: FRESNEL, Eric, F-75007 Paris (FR)
(74) Mandataire: Jaunez, Xavier
(86) Numéro de dépôt international: FR9701731
(87) Numéro de publication internationale: WO9815939

(56) Documents cités:
- EP-A- 0 585 076
- EP-A- 0 698 562
- GB-A- 2 273 492
- GB-A- 2 298 391
- PATENT ABSTRACTS OF JAPAN vol. 96, no. 5, 31 mai 1996 & JP 08 022250 A (FUJI SEAL CO. LTD.), 23 janvier 1996, cité dans la demande

## Description

L'invention concerne le domaine de l'emballage d'objets, et en particulier le conditionnement de produits de consommation tels que les produits alimentaires, chimiques, cosmétiques, ou pharmaceutiques, se présentant par exemple sous la forme d'un récipient à dispositif de fermeture. Plus précisément, l'invention est relative à une enveloppe de sécurité pour objets, notamment mais pas exclusivement pour des récipients à dispositif de fermeture, du type constitué par un manchon en matière plastique thermorétractable apte à entourer étroitement une partie de l'objet.

On connaît depuis longtemps de telles enveloppes de sécurité, notamment associées au goulot des bouteilles, et destinées à constituer une garantie d'inviolabilité pour le consommateur, en garantissant que le produit concerné n'a pas subi de substitution frauduleuse ou n'a pas fait l'objet d'une altération malveillante. L'enveloppe de sécurité se présente alors classiquement sous la forme d'un manchon équipé d'une bande d'arrachage, cette dernière permettant, par traction exercée sur une extrémité de celle-ci, d'ouvrir l'enveloppe pour accéder au dispositif de fermeture du récipient. L'indication d'effraction est parfois améliorée grâce à la présence de microperforations ménagées selon un motif particulier dans la paroi du manchon, de telle façon que toute tentative d'arrachage en force de l'enveloppe thermorétractée entraîne une déchirure de l'enveloppe et complique la remise en place de celle-ci sur le récipient.

Le document GB-A-2.298.391 décrit une enveloppe de sécurité en matière plastique thermorétractable, équipée sur sa face interne d'une bande hologramme transférable, et éventuellement d'une bande d'arrachage disposée au voisinage de et parallèlement à la bande hologramme. Cette bande d'arrachage sert uniquement à assurer la fonction traditionnelle d'aide à la déchirure de l'enveloppe, sans intervenir en rien dans la fonction de sécurité qui est assurée par la bande hologramme.

Le document GB-A-2.273.492 décrit l'utilisation d'une bande d'arrachage à hologramme (la bande d'arrachage porte alors elle-même l'hologramme) qui est collée sur la face interne d'un manchon thermorétractable, avec une ligne de perforations prévue à la fois dans la bande et dans la paroi du manchon. Il convient de noter que la face libre de la bande n'est bien entendu pas adhésive, de sorte qu'à l'ouverture du manchon, les deux portions séparées de la bande restent associées aux parois du manchon.

Les documents EP-A-0 585 076 et JP-A-08 022250 décrivent une technique très proche de la précédente, avec une bande holographique collée sur la face interne d'un manchon thermorétractable. La face libre de la bande est revêtue d'une épaisseur de silicone (pour un conditionnement en rouleau), de sorte que l'hologramme n'est pas transférable.

Il a par ailleurs été proposé de réaliser des enveloppes de sécurité dont le manchon est équipé, sur sa face interne, d'un élément holographique et d'une bande d'arrachage passant derrière cet élément holographique, afin de déchirer ledit élément lors de l'ouverture de l'enveloppe effectuée en tirant sur ladite bande.

Dans ce cas, la paroi interne du manchon en matière plastique thermorétractable porte un élément holographique réalisé sous la forme d'une pastille et collé directement contre la paroi interne du manchon, cette pastille comportant une couche de métallisation holographique portée par une couche de support en matière plastique transparente adhérant à la face interne du manchon. La zone concernée de la bande d'arrachage est alors au contact direct de la couche de métallisation holographique. Avec une telle enveloppe de sécurité, lorsque l'utilisateur exerce une traction sur l'extrémité de la bande d'arrachage afin d'ouvrir l'enveloppe, cette bande d'arrachage déchire progressivement la paroi latérale du manchon, et creuse un sillon dans l'élément holographique lorsque la zone de séparation arrive à cet élément. Une fois la bande d'arrachage totalement enlevée, l'enveloppe de sécurité peut alors être ouverte, et l'élément holographique porté par cette enveloppe est séparé en deux tronçons qui restent chacun sur la paroi interne de l'enveloppe, de part et d'autre du sillon de déchirure.

Un tel élément holographique est destiné à constituer une certification d'origine du produit.

Cependant, une telle enveloppe de sécurité ne procure pas une véritable indication d'effraction, notamment du fait que le manchon peut être enlevé par glissement ou par découpe, puis remplacé par une autre enveloppe équipée intérieurement d'un autre élément holographique identique ou analogue à l'élément d'origine. Dans certains cas, le fraudeur peut même décoller l'élément holographique d'origine si celui-ci est très difficile à reproduire, afin de le recoller sur un nouveau support qui est ensuite replacé sur l'objet.

L'invention vise précisément à résoudre ce problème technique, en permettant une détection totalement fiable de toute manipulation frauduleuse ou anormale de l'enveloppe de sécurité à élément holographique, en vue d'une garantie totale pour le consommateur.

L'invention a ainsi pour objet de réaliser une enveloppe de sécurité du type précité, dont la structure permet d'avoir à la fois une indication d'effraction et une certification d'origine totalement fiables, rendant visible toute manipulation frauduleuse ou anormale de l'enveloppe rétractée sur l'objet.

Ce problème est résolu conformément à l'invention grâce à une enveloppe de sécurité pour objets, notamment pour des récipients à dispositif de fermeture, du type constitué par un manchon en matière plastique thermorétractable apte à entourer étroitement une partie de l'objet, ledit manchon étant en outre équipé, sur sa face interne, d'un élément holographique et d'une bande d'arrachage passant derrière l'élément holographique afin de déchirer ledit élément lors de l'ouverture de l'enveloppe effectuée en tirant sur ladite bande, caractérisée en ce que l'élément holographique est agencé pour être transférable sur la paroi en regard de l'objet et adhérer à cette paroi par des zones situées de part et d'autre de la bande d'arrachage de façon à emprisonner une portion de ladite bande d'arrachage, de sorte que toute manipulation frauduleuse de l'enveloppe rétractée sur l'objet a pour effet de déplacer la bande d'arrachage et par suite de détruire automatiquement et de façon visible l'élément holographique transféré.

Ainsi, contrairement à la technique antérieure selon laquelle les deux parties d'élément holographique obtenues par suite de la traction de la bande d'arrachage étaient fixées au manchon, ces deux parties d'élément holographique restent maintenant indissociablement associées à l'objet grâce au transfert sur la paroi de celui-ci et à l'adhésion à cette paroi. Lorsque le consommateur tire sur la bande d'arrachage pour ouvrir l'enveloppe de sécurité selon l'invention, il peut constater visuellement la présence de parties résiduelles de l'élément holographique adhérant à la paroi de l'objet, ce qui lui garantit que le produit acquis est bien d'origine. Par ailleurs, en cas de manipulation frauduleuse ou anormale de l'enveloppe de sécurité rétractée sur l'objet, l'élément holographique, qui est mince et fragile (l'épaisseur est de l'ordre de quelques microns), est automatiquement détruit du fait de sa disposition en liaison intime avec la paroi de l'objet réalisée tout en emprisonnant la bande d'arrachage : en effet, tout déplacement du manchon, que ce soit dans une direction axiale, circonférentielle, ou oblique, a pour effet d'entraîner la bande d'arrachage qui lui est intimement liée, et par suite d'imprimer un déplacement relatif entre l'élément holographique et la bande d'arrachage, ce qui aboutit à la destruction de cet élément holographique. La bande d'arrachage ainsi emprisonnée entre l'élément holographique et la paroi de l'objet, assure ainsi une fonction de transmetteur d'efforts et d'organe de destruction de l'élément holographique en cas de manipulation frauduleuse de l'enveloppe rétractée.

L'élément holographique peut être agencé pour être transféré au niveau de ses zones concernées en totalité sur la paroi de l'objet lors de la thermorétraction du manchon, ou en variante en partie seulement sur cette paroi, conformément à un motif prédéterminé. Dans tous les cas, au moins une partie de l'élément holographique est transférée sur la paroi de l'objet, et doit ainsi apparaître après ouverture de l'enveloppe de sécurité pour assurer sa fonction de certification d'origine.

Lorsque l'enveloppe de sécurité est associée à des récipients dont le dispositif de fermeture inclut un bouchon ou capuchon surmontant un corps de récipient, l'élément holographique pourra être transféré sur la paroi latérale du corps de récipient, ou en variante sur la paroi latérale du bouchon ou capuchon lui-même, voire même sur les deux simultanément, lors de la thermorétraction du manchon. Dans ce dernier cas, on pourra prévoir que l'élément holographique a une forme allongée définissant deux pastilles raccordées par un ligament, avec une pastille transférée sur la paroi latérale du corps de récipient et une pastille transférée sur la paroi latérale du bouchon ou capuchon.

On pourra en outre prévoir que l'élément holographique et la zone adjacente de la paroi du manchon rétractée sur l'objet présentent localement un marquage, notamment un codage, réalisé par un rayonnement tel que du laser. Avantageusement alors, on prévoira que l'élément holographique présente une fenêtre permettant de marquer également la zone adjacente de la paroi de l'objet.

Conformément à un mode d'exécution particulier, dans lequel l'élément holographique équipant le manchon comporte une couche de métallisation holographique portée par une couche de support en matière plastique transparente adhérant à la face interne dudit manchon, l'enveloppe de sécurité est agencée de telle façon que la couche de métallisation holographique précitée présente sur sa face libre une couche d'adhésif réactivable, et cette couche de métallisation holographique est liée à la couche de support par une couche de liaison à transfert permettant la dissociation totale ou partielle de ladite couche de métallisation holographique en vue de son transfert sur la paroi de l'objet, et de son collage sur cette paroi par suite d'une réactivation de la couche d'adhésif.

La couche d'adhésif prévue sur la face libre de la couche de métallisation holographique est de préférence thermoréactivable, ce qui facilite le transfert et le collage de cette couche de métallisation sur la paroi de l'objet.

Selon le cas, la bande d'arrachage pourra par ailleurs présenter une largeur suffisante pour détruire l'élément holographique transféré en formant un sillon important facilitant la détection visuelle d'une manipulation frauduleuse.

Il est en outre possible de prévoir que la bande d'arrachage porte en outre un filament métallique s'étendant suivant la longueur de ladite bande, ledit filament constituant une antenne associée à un système électronique de surveillance contre le vol fonctionnant sur un principe de détection magnétique.

A tire d'exemple, l'élément holographique pourra présenter un décor à dominante argentée ou dorée.

Il sera enfin également possible de prévoir qu'un même manchon soit équipé de plusieurs éléments holographiques transférables, avec une bande d'arrachage passant derrière chaque élément holographique.

D'autres caractéristiques et avantages de l'invention apparaîtront plus clairement à la lumière de la description qui va suivre et des dessins annexés, concernant un mode de réalisation particulier, en référence aux figures où :
- la figure 1 illustre différents types d'objets, ici des récipients à dispositif de fermeture, équipés d'une enveloppe de sécurité à élément holographique transférable sur une paroi de l'objet conformément à l'invention ;
- la figure 2 est une vue partielle de détail montrant la zone de l'élément holographique lorsque l'enveloppe de sécurité est rétractée sur l'objet ;
- la figure 3, qui est à rapprocher de la figure 2, illustre la même situation après retrait de l'enveloppe de sécurité par suite d'une traction exercée sur la bande d'arrachage, laissant ainsi sur la paroi de l'objet une portion résiduelle de l'élément holographique qui a été déchiré par la bande d'arrachage ;
- la figure 4 est une coupe de détail selon la ligne IV-IV de la figure 2 ;
- la figure 5 est une vue en plan de la surface intérieure développée du manchon constitutif de l'enveloppe, avec son élément holographique transférable et sa bande d'arrachage ;
- la figure 6 est une coupe selon VI-VI de la figure 5, à une échelle agrandie, permettant de mieux distinguer la structure multicouche de l'élément holographique associé à la paroi interne du manchon en matière plastique thermorétractable ;
- la figure 7 illustre une variante à élément holographique spécifiquement conformé pour enjamber la ligne de séparation entre le corps et le capuchon de l'objet ;
- la figure 8 illustre une autre variante à deux éléments holographiques disposés de part et d'autre de la ligne de séparation précitée ;
- la figure 9 illustre encore un autre mode d'exécution avec un marquage laser localisé, et la figure 10 une variante utilisant un élément holographique à fenêtre pour marquer également la paroi de l'objet.

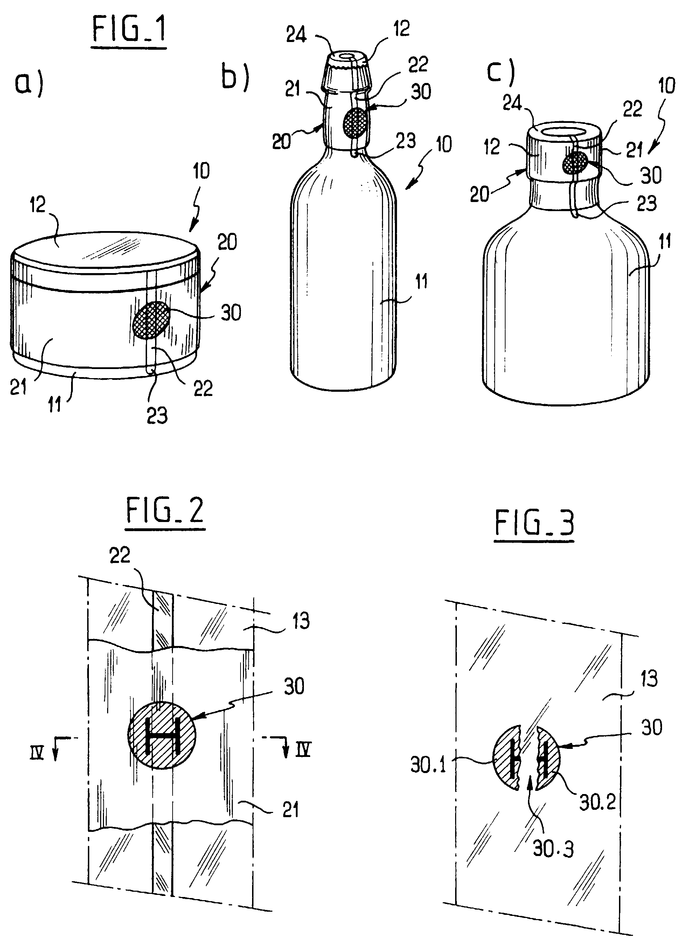

La figure 1 illustre plusieurs types d'objets à titre d'exemple, qui sont ici des récipients notés 10, tous revêtus d'une enveloppe de sécurité 20 qui est du type constitué par un manchon 21 en matière plastique thermorétractable entourant étroitement une partie de l'objet. S'agissant en l'espèce de récipients à dispositif de fermeture, le manchon 21 entoure une partie de chaque récipient dans la zone du dispositif de fermeture, afin d'en assurer l'inviolabilité.

En a), on a illustré un récipient dont le corps 11 est surmonté d'un capuchon éventuellement vissé 12, alors qu'en b) le récipient 10 se présente sous la forme d'une bouteille dont le corps 11 est surmonté d'une capsule de bouchage 12, et qu'en c) le récipient 10 est un flacon dont le corps 11 est surmonté d'un bouchon vissé ou clipsé 12. Dans tous les cas, le récipient 10 est équipé d'une enveloppe de sécurité 20 thermorétractée sur sa paroi en entourant étroitement la partie du récipient correspondant à la zone du dispositif de fermeture. Pour les récipients illustrés en b) et c), on a représenté une enveloppe dont le bord supérieur recouvre par une couronne notée 24 la face supérieure de la capsule ou bouchon 12.

Il va de soi que les exemples donnés à la figure 1 sont purement illustratifs, et que l'invention n'est aucunement limitée à un type particulier d'objet ni, lorsqu'il s'agit de récipients, à un type particulier de dispositif de fermeture. Dans la suite de la description, on se référera à une application aux récipients à dispositif de fermeture, mais ceci à titre d'exemple seulement.

Le manchon 21 est équipé, sur sa face interne, d'un élément holographique 30 et d'une bande d'arrachage 22 passant derrière cet élément holographique afin de déchirer ledit élément lors de l'ouverture de l'enveloppe de sécurité 20 effectuée en tirant sur ladite bande. Sur la figure 1, on a représenté un élément holographique 30 sous la forme d'une pastille sensiblement circulaire, mais il va de soi que l'invention n'est aucunement limitée à cette forme particulière d'élément holographique. La bande d'arrachage présente ici une extrémité de préhension notée 23 sur laquelle l'utilisateur peut tirer pour ouvrir l'enveloppe de sécurité 20.

Ainsi que cela va être exposé plus en détail ci-après, et conformément à une caractéristique essentielle de l'invention, l'élément holographique 30 est agencé pour être transférable sur la paroi en regard de l'objet 10 et adhérer à cette paroi par des zones situées de part et d'autre de la bande d'arrachage 22 de façon à emprisonner une portion de ladite bande d'arrachage.

Sur la figure 1, l'élément holographique 30 est transféré sur une partie prédéterminée d'un récipient, et plus précisément sur la paroi latérale du corps 11, ici au voisinage du bouchon ou capuchon 12, pour les récipients illustrés en a) et b), et sur la paroi latérale du bouchon ou capuchon 12 lui-même pour le récipient illustré en c).

Dans la situation de l'enveloppe de sécurité rétractée sur l'objet, comme illustré sur les exemples de la figure 1, il n'est pas possible de constater visuellement que l'élément holographique qui est visible par transparence est en réalité transféré sur la paroi de l'objet. Par contre, après ouverture normale de l'enveloppe de sécurité, des portions résiduelles de l'élément holographique transféré subsistent sur l'objet, assurant ainsi la fonction souhaitée de certification d'origine, comme un véritable sceau.

Les figures 2 et 3 illustrent la destruction normale de l'élément holographique 30 transféré sur l'objet par suite de l'arrachage de la bande 22 :

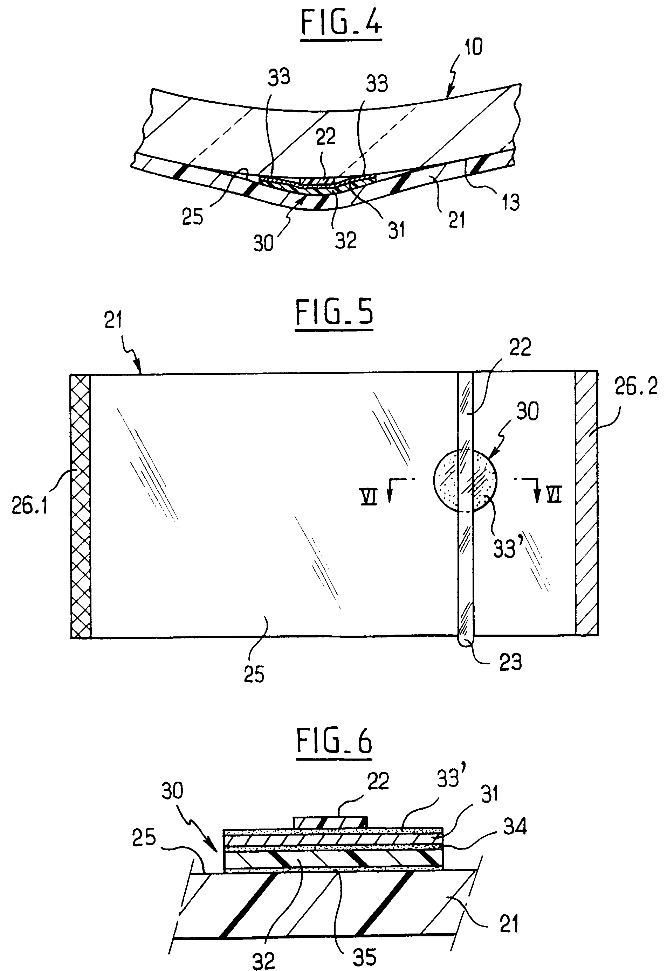

- Figure 2 : le manchon 21 est appliqué contre la paroi notée 13 de l'objet, et l'on distingue également l'élément holographique 30, ici illustré sous la forme d'une pastille présentant la lettre H, ainsi que la bande d'arrachage 22 qui passe derrière cet élément holographique 30, en étant sur toute sa longueur au contact direct de la paroi 13 de l'objet. Comme cela a été dit plus haut, l'élément holographique 30 adhère à la paroi 13 de l'objet par ses parties qui sont de part et d'autre de la bande d'arrachage 22. La coupe de la figure 4 permet d'ailleurs de bien distinguer l'empilement successif des différents composants de l'enveloppe de sécurité 20 appliquée étroitement contre la paroi de l'objet 10.
- Figure 3 : une fois la bande d'arrachage tirée pour ouvrir l'enveloppe de sécurité, des portions notées 30.1, 30.2 de l'élément holographique 30 subsistent sur la paroi 13 de l'objet, avec un sillon à découpe irrégulière noté 30.3 résultant de la déchirure effectuée par la bande d'arrachage lors de la traction exercée sur celle-ci. On constate sur la figure 3 que la lettre H est donc coupée en deux de façon parfaitement visible pour un observateur.

En cas de manipulation frauduleuse ou anormale de l'enveloppe de sécurité 20 rétractée sur l'objet 10, une telle manipulation aboutit automatiquement à un déplacement de la bande d'arrachage 22 et par suite à une destruction partielle et totalement visible de l'élément holographique transféré 30, en laissant subsister des portions de l'élément holographique sur la paroi de l'objet, par exemple conformément à la représentation donnée à la figure 3. Ceci complique ainsi considérablement la tâche d'un fraudeur, dans la mesure où celui-ci doit commencer par gratter les parties résiduelles de l'élément holographique transféré sur la paroi de l'objet, puis replacer une nouvelle enveloppe portant un élément holographique avec sa bande d'arrachage, mais alors la preuve d'une telle manipulation serait immédiatement détectée lors de l'ouverture ultérieure de l'enveloppe de sécurité par la simple constatation que l'élément holographique déchiré reste attaché à l'enveloppe après ouverture de celle-ci. On pourra à cet effet choisir des adhésifs de transfert puissants, rendant très difficile le retrait mécanique ou chimique des traces d'élément holographique transféré encore présentes sur l'objet : ceci renforce encore la protection conférée.

La figure 4 illustre plus en détail l'agencement en sandwich des différents composants de l'enveloppe de sécurité 20 selon l'invention. La structure de l'élément holographique 30 est illustrée sommairement avec une couche de support 32 en matière plastique transparente adhérant à la face interne notée 25 du manchon 21, et une couche notée 31 de métallisation holographique portée par cette couche de support 32. A la différence des techniques connues, la couche 31 de métallisation holographique est transférable et elle adhère par des zones 33, situées de part et d'autre de la bande d'arrachage 22, à la paroi 13 de l'objet 10, en emprisonnant une portion de ladite bande d'arrachage.

Lorsque le manchon 21 est à plat, sa face interne 25 se présente conformément à l'illustration donnée à la figure 5. On reconnait sur cette figure la présence de l'élément holographique 30 avec sur sa face libre une couche 33' qui est une couche d'adhésif réactivable, notamment thermoréactivable, et de la bande d'arrachage 22 passant derrière l'élément holographique, c'est-à-dire devant pour l'observateur voyant la face interne de la paroi. On distingue également deux bandes d'extrémité notées 26.1, 26.2 qui sont superposées lorsque le manchon est constitué, la zone de recouvrement correspondant à un scellage formant ledit manchon.

La figure 6 permet de mieux distinguer la structure multicouche de l'élément holographique transférable 30 qui est associé à la paroi interne 25 du manchon 21 en matière plastique thermorétractable.

L'élément holographique 30 comporte, de façon classique, une couche 31 de métallisation holographique portée par une couche de support 32 en matière plastique transparente, cette dernière couche adhérant à la face interne 25 grâce à une mince couche adhésive 35, par exemple un vernis thermocollant transparent. La couche de support 32 pourra par exemple être réalisée en polyéthylène ou en polyéthylène téréphtalate.

A la différence des éléments holographiques connus, la couche 31 de métallisation holographique d'une part présente sur sa face libre une couche 33' d'adhésif réactivable, et d'autre part est liée à la couche de support 32 par une couche de liaison à transfert 34 permettant une dissociation totale ou partielle de la couche 31 de métallisation holographique en vue de son transfert sur la paroi 13 de l'objet et de son collage sur cette paroi par suite d'une réactivation de la couche d'adhésif 33'. La couche 33' d'adhésif réactivable confère alors à la face libre de la couche 31 de métallisation holographique, par suite d'une réactivation de ladite couche 33', notamment à chaud si l'on utilise un adhésif thermoréactivable, une adhésivité à la paroi de l'objet qui est supérieure à la force de maintien donnée par la couche 34 de liaison à transfert, cette dernière pouvant être constituée sous la forme d'un vernis de transfert, par exemple à base d'agents répulsifs (de tels vernis sont dénommés "release" par les anglo-saxons). Ainsi, si l'on utilise un adhésif thermoréactivable, la chaleur accompagnant la thermorétraction du manchon 21 a pour effet de réactiver la couche adhésive 33' qui vient adhésiver intimement la couche 31 de métallisation holographique à la paroi de l'objet. Grâce à la couche de liaison à transfert 34, toute manipulation frauduleuse sur l'enveloppe a automatiquement pour effet de dissocier la couche de métallisation holographique 31 de sa couche de support 32 au niveau de la couche de liaison à transfert 34, ce qui permet à la bande d'arrachage 22 d'induire des efforts provoquant la destruction de l'élément holographique 30.

Le transfert de l'élément holographique 30 peut être total, auquel cas la couche adhésive 33' réactivable à chaud concerne toute la face libre de la couche 31 de métallisation holographique. Il peut en variante ne concerner qu'une partie seulement, la partie transférée de l'élément holographique pouvant être organisée selon un motif prédéterminé. Dans ce cas, après enlèvement de l'enveloppe de sécurité, la partie transférée du motif doit se retrouver sur l'objet, tandis que la partie non transférée est enlevée avec l'enveloppe déchirée.

De préférence, la bande d'arrachage 22 présentera une largeur suffisante pour détruire l'élément holographique 30 transféré selon un sillon important (sillon noté 30.3 sur la figure 3) facilitant la détection visuelle d'une manipulation frauduleuse.

L'élément holographique 30, ou plus précisément sa couche 31 de métallisation holographique, pourra présenter un décor à dominante argentée ou dorée, ce qui permet de faciliter la constatation visuelle de la partie transférée de cet élément holographique.

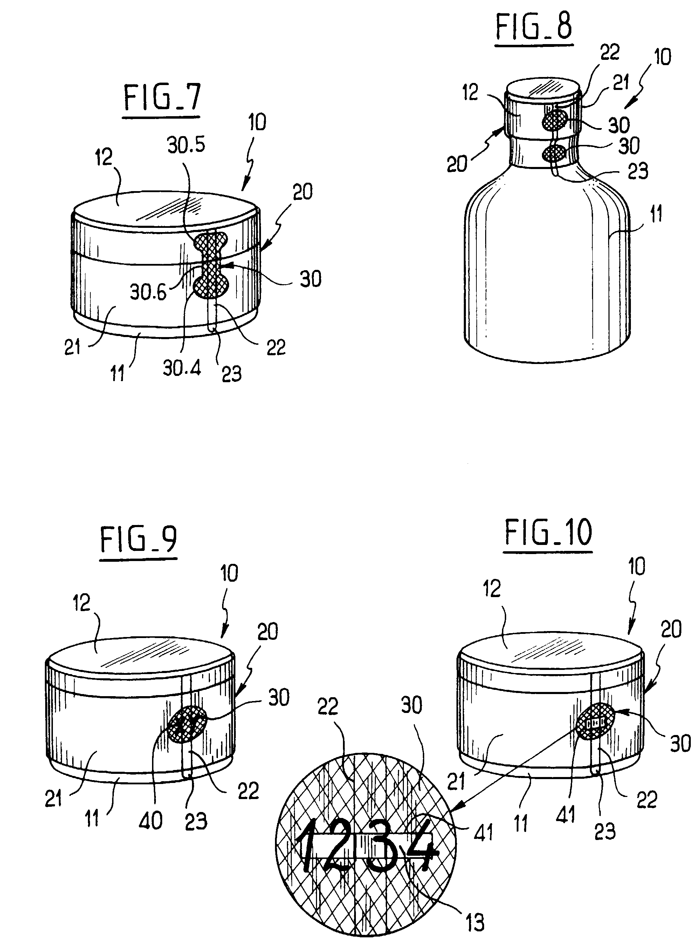

La figure 7 illustre une variante dans laquelle l'élément holographique 30 est spécifiquement conformé pour enjamber la ligne de séparation entre le corps 11 et le bouchon ou capuchon 12 de l'objet 10, en vue d'un transfert, lors de la thermorétraction du manchon 21, à la fois sur la paroi latérale du corps 11 et sur la paroi latérale du bouchon ou capuchon 12. Toute tentative d'ouverture frauduleuse est alors immanquablement détectée. En l'espèce, l'élément holographique a une forme allongée (en forme d'os) définissant deux pastilles 30.4 et 30.5 raccordées par un ligament 30.6, la pastille 30.4 étant transférée sur la paroi latérale du corps 11, et la pastille 30.5 sur la paroi latérale du bouchon ou capuchon 12. Le ligament 30.6 forme un lien intermédiaire dont la rupture accidentelle ou frauduleuse serait automatiquement révélée : on renforce ainsi encore la sécurité conférée.

Par ailleurs, bien que l'on ait décrit des enveloppes de sécurité équipées d'un élément holographique unique, il va de soi que l'on pourra prévoir un manchon équipé de plusieurs éléments holographiques transférables 30, avec une bande d'arrachage 22 passant derrière chaque élément holographique. Selon le cas, on pourra envisager une bande d'arrachage unique passant derrière chacun des éléments holographiques utilisés, ou encore un ensemble de plusieurs bandes d'arrachage, de façon à provoquer la destruction d'au moins un élément holographique en cas de manipulation frauduleuse sur l'enveloppe.

La figure 8 illustre une telle variante, avec deux éléments holographiques 30, dont l'un est transféré sur la paroi latérale du corps de récipient 11, et l'autre est transféré sur la paroi latérale du bouchon ou capuchon 12. En l'espèce, les deux éléments holographiques 30 transférés et la bande d'arrachage commune 22 qui passe derrière ceux-ci sont disposés selon une même génératrice du manchon 21. La portion de la bande d'arrachage 22 qui relie les deux éléments holographiques 30 constitue un ligament intermédiaire dont la rupture serait automatiquement révélée au niveau de l'un et/ou l'autre des éléments holographiques : on obtient ainsi une double sécurité.

Il est par ailleurs possible d'utiliser l'enveloppe de l'invention pour faciliter la traçabilité du produit, grâce à un marquage approprié, par exemple par rayonnement laser.

La figure 9 illustre une telle possibilité : l'élément holographique 30 et la zone adjacente de la paroi du manchon 21 rétractée sur l'objet 10 présentent localement un marquage 40 (ici symbolisé par les lettres XY) réalisé par un rayonnement tel que du laser. Ce marquage localisé 40 peut être un codage ou une numérotation (de préférence séquentielle) qui augmente la personnalisation du produit, et permet d'assurer la traçabilité du produit.

Si l'on veut aller plus loin, et marquer également l'objet, on peut prévoir, comme illustré sur la figure 10, que l'élément holographique 30 présente une fenêtre 41 permettant de marquer également la zone adjacente de la paroi 13 de l'objet 10. On réalise ainsi un triple marquage indélébile en bombardant par l'extérieur le manchon thermorétracté, en centrant le rayonnement sur la fenêtre 41, ce qui renforce encore la garantie d'authenticité, et ce sans modifier aucunement la qualité du transfert de l'élément holographique 30 sur la paroi de l'objet. L'agrandissement local en loupe permet de mieux distinguer le marquage laser effectué au niveau de la fenêtre 41, avec le chiffre 1234 qui chevauche ici les bords de la fenêtre 41 et les bords latéraux de la bande d'arrachage 22, procurant ainsi une protection anti-contrefaçon extrêmement efficace (il est en effet quasiment impossible de reproduire des parties enlevées avec le même registre).

Enfin, conformément à une autre variante (non illustrée sur les figures), on pourra prévoir que la bande d'arrachage 22 porte en outre un filament métallique s'étendant suivant la longueur de ladite bande, ce filament constituant une antenne associée à un système électronique de surveillance contre le vol fonctionnant sur un principe de détection magnétique. Pour cette technique particulière, on pourra se référer utilement au document EP-A-0 698 562 de la demanderesse, qui illustre une bande d'arrachage équipée d'un filament métallique constituant une antenne associée à un système électronique de surveillance.

## Revendications

1. Enveloppe de sécurité (20) pour objets (10), notamment pour des récipients à dispositif de fermeture, du type constitué par un manchon (21) en matière plastique thermorétractable apte à entourer étroitement une partie de l'objet, ledit manchon étant en outre équipé, sur sa face interne, d'un élément holographique (30) et d'une bande d'arrachage (22) passant derrière l'élément holographique (30) afin de déchirer ledit élément lors de l'ouverture de l'enveloppe effectuée en tirant sur ladite bande, caractérisée en ce que l'élément holographique (30) est agencé pour être transférable sur la paroi en regard (13) de l'objet (10) et adhérer à cette paroi par des zones (33) situées de part et d'autre de la bande d'arrachage (22) de façon à emprisonner une portion de ladite bande d'arrachage, de sorte que toute manipulation frauduleuse de l'enveloppe (20) rétractée sur l'objet (10) a pour effet de déplacer la bande d'arrachage (22) et par suite de détruire automatiquement et de façon visible l'élément holographique transféré (30).

2. Enveloppe de sécurité (20) selon la revendication 1, caractérisée en ce que l'élément holographique (30) est agencé pour être transféré au niveau de ses zones concernées (33) en totalité sur la paroi (13) de l'objet lors de la thermorétraction du manchon (21).

3. Enveloppe de sécurité (20) selon la revendication 1, caractérisée en ce que l'élément holographique (30) est agencé pour être transféré au niveau de ses zones concernées (33) en partie seulement sur la paroi (13) de l'objet lors de la thermorétraction du manchon (21), conformément à un motif prédéterminé.

4. Enveloppe de sécurité (20) selon l'une des revendications 1 à 3, pour des récipients (10) dont le dispositif de fermeture inclut un bouchon ou capuchon (12) surmontant un corps (11) de récipient, caractérisée en ce que l'élément holographique (30) est transféré sur la paroi latérale du corps de récipient lors de la thermorétraction du manchon (21).

5. Enveloppe de sécurité (20) selon l'une des revendications 1 à 3, pour des récipients (10) dont le dispositif de fermeture inclut un bouchon ou capuchon (12) surmontant un corps (11) de récipient, caractérisée en ce que l'élément holographique (30) est transféré sur la paroi latérale du bouchon ou capuchon (12) lors de la thermorétraction du manchon (21).

6. Enveloppe de sécurité (20) selon l'une des revendications 1 à 3, pour des récipients (10) dont le dispositif de fermeture inclut un bouchon ou capuchon (12) surmontant un corps (11) de récipient, caractérisée en ce que l'élément holographique (30) est transféré à la fois sur la paroi latérale du corps de récipient (11) et sur la paroi latérale du bouchon ou capuchon (12) lors de la thermorétraction du manchon (21).

7. Enveloppe de sécurité (20) selon la revendication 6, caractérisée en ce que l'élément holographique (30) a une forme allongée définissant deux pastilles (30.4, 30.5) raccordées par un ligament (30.6), avec une pastille (30.4) transférée sur la paroi latérale du corps de récipient (11) et une pastille (30.5) transférée sur la paroi latérale du bouchon ou capuchon (12).

8. Enveloppe de sécurité (20) selon l'une des revendications 1 à 7, caractérisée en ce que l'élément holographique (30) et la zone adjacente de la paroi du manchon (21) rétractée sur l'objet (10) présentent localement un marquage (40), notamment un codage, réalisé par un rayonnement tel que du laser.

9. Enveloppe de sécurité (20) selon la revendication 8, caractérisée en ce que l'élément holographique (30) présente une fenêtre (41) permettant de marquer également la zone adjacente de la paroi de l'objet (10).

10. Enveloppe de sécurité (20) selon l'une des revendications 1 à 9, dans laquelle l'élément holographique (30) équipant le manchon (21) comporte une couche (31) de métallisation holographique portée par une couche de support (32) en matière plastique transparente adhérant à la face interne dudit manchon, caractérisée en ce que la couche (31) de métallisation holographique présente sur sa face libre une couche (33') d'adhésif réactivable, et cette couche (31) de métallisation holographique est liée à la couche de support (32) par une couche de liaison à transfert (34) permettant la dissociation totale ou partielle de ladite couche (31) de métallisation holographique en vue de son transfert sur la paroi (13) de l'objet (10), et de son collage sur cette paroi (13) par suite d'une réactivation de la couche d'adhésif (33').

11. Enveloppe de sécurité (20) selon la revendication 10, caractérisée en ce que la couche (33') d'adhésif, prévue sur la face libre de la couche (31) de métallisation holographique, est thermoréactivable.

12. Enveloppe de sécurité (20) selon l'une des revendications 1 à 11, caractérisée en ce que la bande d'arrachage (22) présente une largeur suffisante pour détruire l'élément holographique (30) transféré en formant un sillon important (30.3) facilitant la détection visuelle d'une manipulation frauduleuse.

13. Enveloppe de sécurité (20) selon l'une des revendications 1 à 12, caractérisée en ce que la bande d'arrachage (22) porte en outre un filament métallique s'étendant suivant la longueur de ladite bande, ledit filament constituant une antenne associée à un système électronique de surveillance contre le vol fonctionnant sur un principe de détection magnétique.

14. Enveloppe de sécurité (20) selon l'une des revendications 1 à 13, caractérisée en ce que l'élément holographique (30) présente un décor à dominante argentée ou dorée.

15. Enveloppe de sécurité (20) selon l'une des revendications 1 à 14, caractérisée en ce que le manchon (21) est équipé de plusieurs éléments holographiques transférables (30), avec une bande d'arrachage (22) passant derrière chaque élément holographique (30).

16. Enveloppe de sécurité (20) selon la revendication 15, pour des récipients (10) dont le dispositif de fermeture inclut un bouchon ou capuchon (12) surmontant un corps (11) de récipient, caractérisée en ce que, lors de la thermorétraction du manchon (21), un élément holographique (30) est transféré sur la paroi latérale du corps de récipient (11), et un autre élément holographique (30) est transféré sur la paroi latérale du bouchon ou capuchon (12).

17. Enveloppe de sécurité (20) selon la revendication 16, caractérisée en ce que les deux éléments holographiques (30) transférés et la bande d'arrachage commune (22) sont disposés selon une même génératrice du manchon (21).

## Patentansprüche

1. Sicherheitsumhüllung (20) für Gegenstände (10), insbesondere für Behälter mit einer Schließvorrichtung, wobei die Sicherheitsumhüllung der Art ist, die aus einer wärmeschrumpfbaren Kunststoffhülle (21) besteht, die dazu geeignet ist, einen Teil des Gegenstandes eng zu umhüllen, wobei die Hülle ferner auf ihrer Innenseite mit einem holographischen Element (30) und einem Aufreißband (22) versehen ist, das hinter dem holographischen Element (30) verläuft, um das Element während des Öffnens der Umhüllung, das durch Ziehen an dem Band erfolgt, durchzureißen, **dadurch gekennzeichnet,** daß das holographische Element (30) derart angeordnet ist, daß es auf die gegenüberliegende Wand (13) des Gegenstandes (10) übertragbar ist und an dieser Wand durch Bereiche (33) haften kann, die sich derart zu beiden Seiten des Aufreißbandes (22) befinden, daß sie einen Teil des Abreißbandes einschließen, so daß jegliche betrügerische Manipulation der auf den Gegenstand (10) geschrumpften Umhüllung (20) ein Verschieben des Aufreißbandes (22) und infolgedessen ein automatisches und sichtbares Zerstören des übertragenen holographischen Elementes (30) zur Folge hat.

2. Sicherheitsumhüllung (20) nach Anspruch 1, dadurch **gekennzeichnet**, daß das holographische Element (30) derart angeordnet ist, daß es während des Wärmeschrumpfens der Hülle (21) in Höhe seiner betroffenen Bereiche (33) vollständig auf die Wand (13) des Gegenstandes übertragen wird.

3. Sicherheitsumhüllung (20) nach Anspruch 1, dadurch **gekennzeichnet**, daß das holographische Element (30) derart angeordnet ist, daß es während des Wärmeschrumpfens der Hülle (21) in Höhe seiner betroffenen Bereiche (33) nur teilweise, entsprechend einem vorgegebenen Muster, auf die Wand (13) des Gegenstandes übertragen wird.

4. Sicherheitsumhüllung (20) nach einem der Ansprüche 1 bis 3, für Behälter (10), deren Schließvorrichtung einen Stöpsel oder eine Verschlußkappe (12) einschließt, die über einen Behälterkörper (11) hinausragt, dadurch **gekennzeichnet**, daß das holographische Element (30) während des Wärmeschrumpfens der Hülle (21) auf die Seitenwand des Behälterkörpers übertragen wird.

5. Sicherheitsumhüllung (20) nach einem der Ansprüche 1 bis 3, für Behälter (10), deren Schließvorrichtung einen Stöpsel oder eine Verschlußkappe (12) einschließt, die über den Behälterkörper (11) hinausragt, dadurch **gekennzeichnet**, daß das holographische Element (30) während des Wärmeschrumpfens der Hülle (21) auf die Seitenwand des Stöpsels oder der Verschlußkappe (12) übertragen wird.

6. Sicherheitsumhüllung (20) nach einem der Ansprüche 1 bis 3, für Behälter (10), deren Schließvorrichtung einen Stöpsel oder eine Verschlußkappe (12) einschließt, die über den Behälterkörper (11) hinausragt, **dadurch gekennzeichnet,** daß das holographische Element (30) während des Wärmeschrumpfens der Hülle (21) gleichzeitig auf die Seitenwand des Behälterkörpers (11) und auf die Seitenwand des Stöpsels oder der Verschlußkappe (12) übertragen wird.

7. Sicherheitsumhüllung (20) nach Anspruch 6, dadurch **gekennzeichnet**, daß das holographische Element (30) eine längliche Form hat, die zwei Plättchen (30.4, 30.5) festlegt, die über ein Band (30.6) verbunden sind, wobei ein Plättchen (30.4) auf die Seitenwand des Behälterkörpers (11) und ein Plättchen (30.5) auf die Seitenwand des Stöpsels oder der Verschlußkappe (12) übertragen wird.

8. Sicherheitsumhüllung (20) nach einem der Ansprüche 1 bis 7, dadurch **gekennzeichnet**, daß das holographische Element (30) und der angrenzende Bereich der auf den Gegenstand (10) geschrumpften Wand der Hülle (21) lokal eine Markierung (40) aufweisen, insbesondere eine Kodierung, die durch Strahlung, wie z. B. durch Laserstrahlung, erzeugt wird.

9. Sicherheitsumhüllung (20) nach Anspruch 8, dadurch **gekennzeichnet**, daß das holographische Element (30) ein Fenster (41) hat, das ebenfalls das Markieren des angrenzenden Bereiches der Wand des Gegenstandes (10) ermöglicht.

10. Sicherheitsumhüllung (20) nach einem der Ansprüche 1 bis 9, bei der das holographische Element (30), mit dem die Hülle (21) versehen ist, eine holographische Metallisierungsschicht (31) hat, die von einer durchsichtigen Trägerschicht (32) aus Kunststoff getragen wird, die an der Innenseite der Hülle haftet, dadurch **gekennzeichnet,** daß die holographische Metallisierungsschicht (31) auf ihrer freien Seite eine reaktivierbare Haftschicht (33') aufweist, und daß diese holographische Metallisierungsschicht (31) mit der Trägerschicht (32) über eine Transferverbindungsschicht (34) verbunden ist, welche die vollständige oder teilweise Ablösung der holographischen Metallisierungsschicht (31) bei ihrer Übertragung auf die Wand (13) des Gegenstandes (10) und ihrem Ankleben an dieser Wand (13) infolge einer Reaktivierung der Haftschicht (33') ermöglicht.

11. Sicherheitsumhüllung (20) nach Anspruch 10, dadurch **gekennzeichnet**, daß die auf der freien Seite der holographischen Metallisierungsschicht (31) vorgesehe Haftschicht (33') wärmeschrumpfbar ist.

12. Sicherheitsumhüllung (20) nach einem der Ansprüche 1 bis 11, dadurch **gekennzeichnet,** daß das Aufreißband (22) eine Breite hat, die ausreicht, um das übertragene, holographische Element (30) zu zerstören, indem eine große Rille (30.3) ausgebildet wird, die das visuelle Erkennen einer betrügerischer Manipulation erleichtert.

13. Sicherheitsumhüllung (20) nach einem der Ansprüche 1 bis 12, dadurch **gekennzeichnet**, daß das Aufreißband (22) ferner einen metallenen Faden trägt, der sich entlang der Längsrichtung des Bandes erstreckt, wobei der Faden eine Antenne darstellt, die zu einem elektronischen Überwachungssystem gegen Diebstahl gehört, das nach einem magnetischen Ortungsprinzip arbeitet.

14. Sicherheitsumhüllung (20) nach einem der Ansprüche 1 bis 13, dadurch **gekennzeichnet**, daß das holographische Element (30) eine Verzierung mit Silber- oder Goldstich aufweist.

15. Sicherheitsumhüllung (20) nach einem der Ansprüche 1 bis 14, dadurch **gekennzeichnet,** daß die Hülle (21) mit mehreren übertragbaren holographischen Elementen (30) versehen ist, mit einem Aufreißband (22), das hinter jedem holographischen Element (30) verläuft.

16. Sicherheitsumhüllung (20) nach Anspruch 15, für Behälter (10), deren Schließvorrichtung einen Stöpsel oder eine Verschlußkappe (12) einschließt, die über einen Behälterkörper (11) hinausragt, dadurch **gekennzeichnet**, daß während des Wärmeschrumpfens der Hülle (21) ein holographisches Element (30) auf die Seitenwand des Behälterkörpers (11) und ein weiteres holographisches Element (30) auf die Seitenwand des Stöpsels oder der Verschlußkappe (12) übertragen wird.

17. Sicherheitsumhüllung (20) nach Anspruch 16, dadurch **gekennzeichnet**, daß die beiden übertragenen holographischen Elemente (30) und das gemeinsame Aufreißband (22) entlang derselben Mantellinie der Hülle (21) angeordnet sind.

## Claims

1. A security envelope (20) for an article (10), in particular a receptacle having a closure device, the envelope being of the type constituted by a sleeve (21) of heat-shrinkable plastics material suitable for closely surrounding a portion of the article, said sleeve being also fitted on its inside face with a holographic element (30) and a tear strip (22) passing behind the holographic element (30) so as to tear said element when the envelope is opened by pulling on said strip, the envelope being characterized in that the holographic element (30) is organized to-be transferable onto the facing wall (13) of the article (10) and to adhere to said wall via zones (33) situated on either side of the tear strip (22) so as to hold a portion of said tear strip captive, such that any fraudulent manipulation of the envelope (20) once shrunk on the article (10) has the effect of displacing the tear strip (22) and consequently of automatically and visibly destroying the transferred holographic element (30).

2. A security envelope (20) according to claim 1, characterized in that the holographic element (30) is organized so that its corresponding zones (33) are transferred in full onto the wall (13) of the article when the sleeve (21) is heat-shrunk.

3. A security envelope (20) according to claim 1, characterized in that the holographic element (30) is organized so that its corresponding zones (33) are transferred in part only onto the wall (13) of the article when the sleeve (21) is heat-shrunk, the part being in the form of a predetermined pattern.

4. A security envelope (20) according to any one of claims 1 to 3 for a receptacle (10) whose closure device includes a stopper or cap (12) surmounting a body (11) of the receptacle, the envelope being characterized in that the holographic element (30) is transferred onto the side wall of the receptacle body during heat shrinking of the sleeve (21).

5. A security envelope (20) according to any one of claims 1 to 3 for a receptacle (10) whose closure device includes a stopper or cap (12) surmounting a body (11) of the receptacle, the envelope being characterized in that the holographic element (30) is transferred onto the side wall of the stopper or cap (12) during heat shrinking of the sleeve (21).

6. A security envelope (20) according to any one of claims 1 to 3 for a receptacle (10) whose closure device includes a stopper or cap (12) surmounting a body (11) of the receptacle, the envelope being characterized in that the holographic element (30) is transferred both onto the side wall of the receptacle body (11) and onto the side wall of the stopper or cap (12) during heat shrinking of the sleeve (21).

7. A security envelope (20) according to claim 1, characterized in that the holographic element (30) is elongate in shape defining two patches (30.4, 30.5) interconnected by a ligament (30.6), with one patch (30.4) being transferred onto the side wall of the receptacle body (11) and one patch (30.5) being transferred onto the side wall of the stopper or cap (12).

8. A security envelope (20) according to any one of claims 1 to 7, characterized in that the holographic element (30) and the adjacent zone of the wall of the sleeve (21) shrunk onto the article (10) presents local marking (40), in particular a code, made by radiation such as laser radiation.

9. A security envelope (20) according to claim 8, characterized in that the holographic element (30) has a window (41) making it possible also to mark the adjacent zone of the wall of the article (10).

10. A security envelope (20) according to any one of claims 1 to 9, in which the holographic element (30) fitted to the sleeve (21) comprises a layer (31) of holographic metallization carried by a support layer (32) of transparent plastics material adhering to the inside face of said sleeve, the envelope being characterized in that the layer (31) of holographic metallization presents, on its free face, a layer (33') of reactivatable adhesive, and said layer (31) of holographic metallization is bonded to the support layer (32) by a transfer bonding layer (34) enabling said layer (31) of holographic metallization to be totally or partially dissociated therefrom for transfer onto the wall (13) of the article (10), and enabling it to be stuck to said wall (13) when the adhesive layer (33') is reactivated.

11. A security envelope (20) according to claim 10, characterized in that the adhesive layer (33') provided on the free face of the layer (31) of holographic metallization is reactivatable by heat.

12. A security envelope (20) according to any one of claims 1 to 11, characterized in that the tear strip (22) is of a width sufficient to destroy the transferred holographic element (30) by forming a wide gap (30.3), thereby facilitating visual detection of fraudulent manipulation.

13. A security envelope (20) according to any one of claims 1 to 12, characterized in that the tear strip (22) also carries a metal filament extending lengthwise relative to said strip, said filament constituting an antenna associated with an electronic system for surveillance against theft and operating on a magnetic detection principle.

14. A security envelope (20) according to any one of claims 1 to 13, characterized in that the holographic element (30) is of an appearance that is predominantly silver-colored or gold-colored.

15. A security envelope (20) according to any one of claims 1 to 14, characterized in that the sleeve (21) is fitted with a plurality of transferable holographic elements (30) together with a tear strip (22) passing behind each holographic element (30).

16. A security envelope (20) according to claim 15, for a receptacle (10) whose closure device includes a stopper or cap (12) surmounting a receptacle body (11), the envelope being characterized in that, during heat shrinking of the sleeve (21), one holographic element (30) is transferred onto the side wall of the receptacle body (11) and another holographic element (30) is transferred onto the side wall of the stopper or cap (12).

17. A security envelope (20) according to claim 16, characterized in that the two transferred holographic elements (30) and the common tear strip (22) are disposed on a common generator line of the sleeve (21).
